# EUROPÄISCHE PATENTANMELDUNG

(11) **EP 2 244 427 A2**
(43) Veröffentlichungstag der Anmeldung: **27.10.2010**
(21) Anmeldenummer: 10007684.3
(22) Anmeldetag: 26.02.2004
(51) Int. Cl.: H04L 12/56, H04L 12/28, H04L 12/64, H04M 7/00

(54) **Datenverarbeitungs-/Datenübertragungsgerät und Datenendeinrichtung für ein leitungsvermitteltes Netz und paketvermitteltes Netz**

(30) Priorität: 26.02.2003 DE 10308304
(62) Teilanmeldung aus: 04714783.0
(71) Anmelder: SIEMENS AKTIENGESELLSCHAFT, 80333 München (DE)
(72) Erfinder: Logemann, Gunter, 85399 Halbergmoos (DE); Palandöken, Hasan, 82069 Hohenschäftlarn (DE); Schäfer, Frank, 80803 München (DE)

(57) **Zusammenfassung**

Datenverarbeitungs-/Datenübertragungsgerät und Datenendeinrichtung für ein leitungsvermitteltes Netz und paketvermitteltes Netz

Um bei einem Datenverarbeitungs-/Datenübertragungsgerät und einer Datenendeinrichtung für ein leitungs- und paketvermitteltes Netz die logische Trennung zwischen Applikationen, die auf dem leitungsvermittelten Netz, z.B. PSTN, ISDN, basieren, und Applikationen, die auf dem paketvermittelten Netz, z.B. Internet, basieren, aufheben zu können, weist das als Datenverarbeitungs-/Datenübertragungsgerät bezeichnete, universell einsetzbare Gerät (DVÜG) zur automatischen Verarbeitung von Daten und zum Senden und Empfangen von Daten sowohl in das paketvermittelte bzw. aus dem paketvermittelten Netz (PVN) als auch in das leitungsvermittelte bzw. aus dem leitungsvermittelten Netz (LVN), das sowohl dem paketvermittelten Netz (PVN) zuordbar als auch mit dem leitungsvermittelten Netz (LVN) verbindbar ist und dem mindestens eine Datenendeinrichtung (DEE) zum Senden und Empfangen von Daten in das leitungsvermittelte bzw. aus dem leitungsvermittelten Netz (LVN) zugeordnet oder zuordbar ist, steuerbare Umschaltmittel (USM2) auf, die derart steuerbar sind, dass die Datenendeinrichtung (DEE), die in einem ersten Betriebsmodus zum Senden und Empfangen von Daten über das Datenverarbeitungs-/Datenübertragungsgerät (DVÜG) mit dem leitungsvermittelten Netz (LVN) verbunden ist, aus dem ersten Betriebsmodus in einen zweiten Betriebsmodus, in dem die Datenendeinrichtung (DEE) zum Senden und Empfangen von Daten über das Datenverarbeitungs-/Datenübertragungsgerät (DVÜG) mit dem paketvermittelten Netz (PVN) verbunden ist, umschaltbar ist und umgekehrt.

## Beschreibung

Die vorliegende Erfindung betrifft ein Datenverarbeitungs-/Datenübertragungsgerät gemäß dem Oberbegriff des Patentanspruches 1 sowie eine Datenendeinrichtung für ein leitungsvermitteltes Netz und paketvermitteltes Netz sowohl gemäß dem Oberbegriff des Patentanspruches 15 als auch gemäß dem Oberbegriff des Patentanspruches 16.

In Veröffentlichungen zum Thema "Home Networking" oder "Connected Home" oder "Telephony and Control" wird von einer Vernetzung von Geräten des privaten Bereiches wie z.B. Fernseher, Personal Computer und andere Geräte des täglichen Lebens gesprochen. Das Telefon, Festnetztelefon oder Schnurlostelefon, dient dabei vorzugsweise als Netzzugang zum leitungsvermittelten Netz (Sprachnetz). Der Zugang zum paketvermittelten Netz (Datennetz) - z.B. Internetzugang - ist dabei unerheblich und kann auf unterschiedlichen Wegen erfolgen.

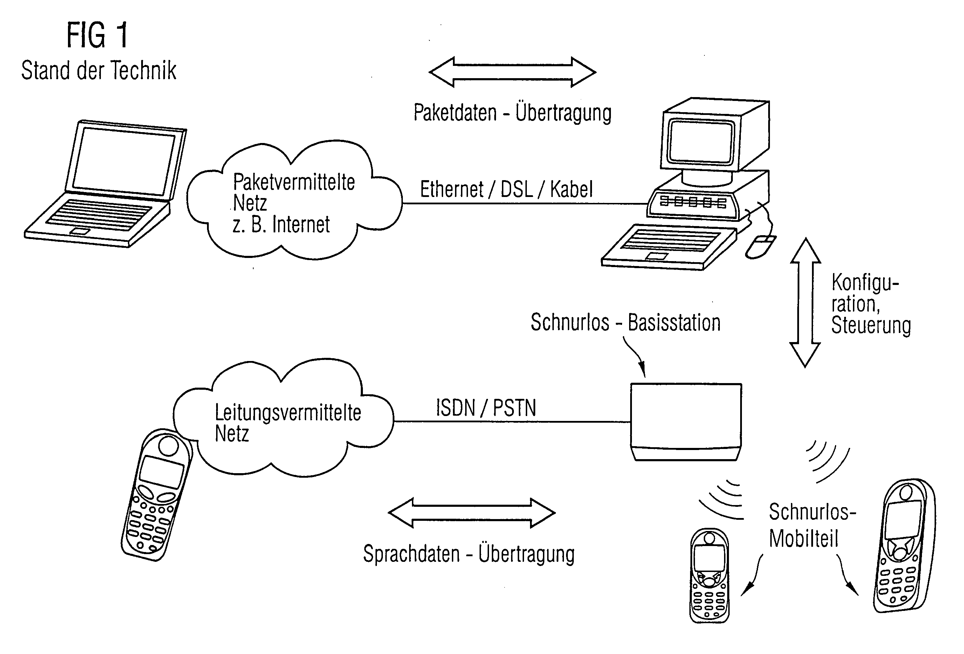

Die Verbindung zwischen paket- und leitungsvermitteltem Netz ist gemäß FIGUR 1 nur insofern bekannter Maßen vorhanden, als die Geräte, beispielsweise ein Personal Computer, der zur Paketdaten-Übertragung über eine Ethernet-, Digital Subscriber Line (DSL)- oder Kabel-Verbindung mit dem paketvermittelten Netz, z.B. dem Internet, verbunden ist, und beispielsweise eine Schnurlos-Basisstation, die zur Sprachdaten-Übertragung über einen ISDN/PSTN-Netzabschluss mit dem leitungsvermittelten Netz verbunden ist, veranlassen, eine Verbindung aufzubauen (Steuerung) bzw. das Gerät mit Hilfe eines Schnurlos-Mobilteils zu konfigurieren (Konfiguration). Dabei werden Teile der Schnurlos-Basisstation oder die Telefonfunktionalität auf den Personal Computer übertragen. Die Steuerung und Konfiguration kann selbstverständlich auch in umgekehrter Richtung erfolgen.

Entscheidend ist aber, dass keine Sprachdaten im paketvermittelten Netz bzw. im Datennetz verarbeitet werden, sondern immer eine logische Verbindung zwischen dem Sprach-Endgerät, dem Schnurlos-Mobilteil, und der Vermittlungsstelle, der Schnurlos-Basisstation, besteht. Es gibt also keine logische Verbindung zwischen dem leitungsvermittelten Sprachnetz und dem paketvermittelten Datennetz (z.B. Internet) in Bezug auf Sprachdaten. Die Nutzung von Sprachdiensten des paketvermittelten Datennetzes (wie z.B. Internettelephonie, Sprachnachrichten) wird derzeit nicht über das an der Schnurlos-Basisstation angemeldete Schnurlos-Mobilteil genutzt.

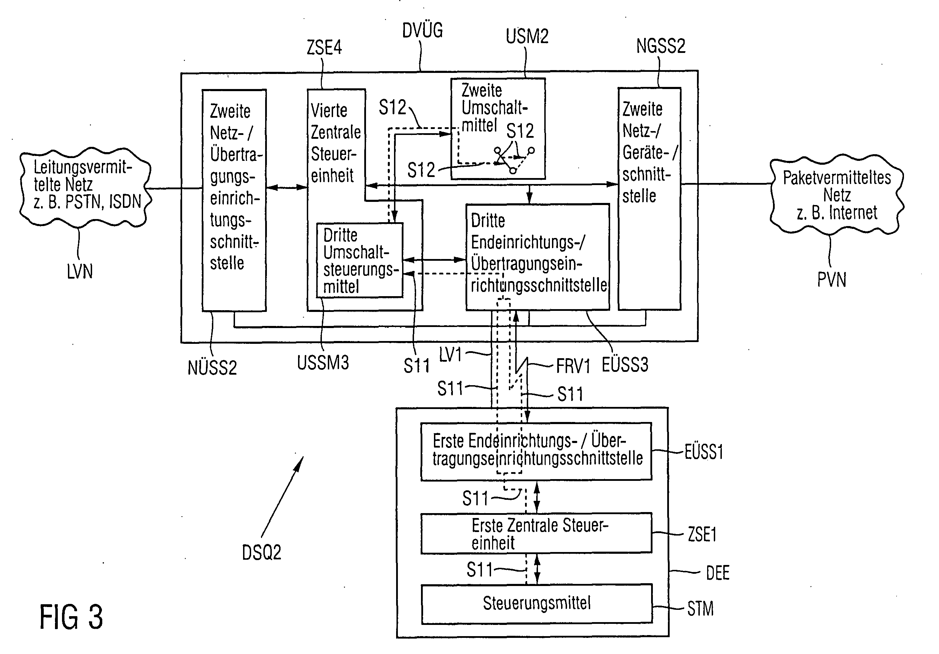

Aus der DE 196 45 368 A1 ist eine Datensenke/-quelle (erste Ausführungsform) bekannt, die gemäß der druckschriftlichen Figur 3 mit der dazugehörigen Beschreibung aus einer Datenendeinrichtung (1, 2) und einem mit der Datenendeinrichtung verbundenen Router (7), der sowohl mit einem leitungsvermittelten Netz (POTS, ISDN) als auch mit einem paketvermittelten Netz (INTERNET) verbunden ist, besteht bzw. gebildet wird. Gemäß einer zweiten Ausführungsform in druckschriftlichen Figur 7 gehört darüber hinaus noch eine Vermittlungsstelle (VS) zu der bekannten Datensenke/-quelle.

Der Router (7) in der druckschriftlichen Figur 3 erhält über einen Dateneingang (74) eingehende Daten u.a. von der Datendeinrichtung (1, 2) und umfasst im Weiteren insbesondere
* einen als IP-Switch zum Umkopieren von IP-Paketen ausgebildeten IP-Router (72) mit einer Datenkompressionseinrichtung (721), einer Verschlüsselungseinrichtung (722) und einer Leitungsverbindung (76) zu anderen Routern bzw. Hosts im Internet,
* eine die Funktion einer Vermittlungsstelle oder einer Telekommunikationsanlage beinhaltende Line-Switching-Einrichtung (73) mit einem digitalen Koppelfeld (731) und einer Leitungsverbindung (75) zum Telefonnetz sowie
* eine dem Dateneingang (74) nachgeschaltete, als logischen Schalter ausgebildete Steuereinrichtung (71) mit einem Zwischenregister (712) und einer Paketierungs-/Depaketierungseinrichtung (711), wobei die Steuereinrichtung (71) sowohl mit dem IP-Router (72) als auch mit der Line-Switching-Einrichtung (73) verbunden ist und wobei die eingehenden/ankommenden Daten entweder über den IP-Router ins paketvermittelte Netz oder über die Line-Switching-Einrichtung ins leitungsvermittelte gesandt werden, also ein Datenrouting stattfindet, bei dem Daten entsprechend einer eingestellten Vermittlungsart (paket- oder leitungsorientierte Vermittlung) geroutet werden.

Gemäß der druckschriftlichen Figur 7 ist der die Steuereinrichtung (71) umfassende Teil der Funktionalität des Routers (7) in die Datenendeinrichtung (1, 2) integriert und somit findet das Datenrouting in der Datenendeinrichtung statt.

Die der Erfindung zugrundeliegende Aufgabe besteht darin, ein Datenverarbeitungs-/Datenübertragungsgerät und eine Datenendeinrichtung für ein leitungsvermitteltes Netz und paketvermitteltes Netz anzugeben, das bzw. die die logische Trennung zwischen Applikationen, die auf dem leitungsvermittelten Netz, z.B. PSTN, ISDN, basieren, und Applikationen, die auf dem paketvermittelten Netz, z.B. Internet, basieren, aufhebt.

Diese Aufgabe wird ausgehend von dem in dem Oberbegriff des Patentanspruches 1 definierten Datenverarbeitungs-/Datenübertragungsgerät durch die in dem Kennzeichen des Patentanspruches 1 angegebenen Merkmale gelöst.

Außerdem wird die Aufgabe sowohl ausgehend von der in dem Oberbegriff des Patentanspruches 15 definierten Datenendeinrichtung durch die in dem Kennzeichen des Patentanspruches 15 angegebenen Merkmale als auch ausgehend von der in dem Oberbegriff des Patentanspruches 16 definierten Datenendeinrichtung durch die in dem Kennzeichen des Patentanspruches 16 angegebenen Merkmale gelöst.

Die der Erfindung zugrundeliegende Idee besteht darin, ein als Datenverarbeitungs-/Datenübertragungsgerät bezeichnetes, universell einsetzbares Gerät zur automatischen Verarbeitung von Daten und zum Senden und Empfangen von Daten sowohl in das paketvermittelte bzw. aus dem paketvermittelten Netz als auch in das leitungsvermittelte bzw. aus dem leitungsvermittelten Netz, das sowohl dem paketvermittelten Netz zuordbar als auch mit dem leitungsvermittelten Netz verbindbar ist und dem mindestens eine Datenendeinrichtung zum Senden und Empfangen von Daten in das leitungsvermittelte bzw. aus dem leitungsvermittelten Netz zugeordnet oder zuordbar ist, mit steuerbare Umschaltmittel zu versehen, die derart steuerbar sind, dass die Datenendeinrichtung, die in einem ersten Betriebsmodus über das Datenverarbeitungs-/Datenübertragungsgerät mit dem leitungsvermittelten Netz verbunden ist, aus dem ersten Betriebsmodus in einen zweiten Betriebsmodus, in dem die Datenendeinrichtung über das Datenverarbeitungs-/Datenübertragungsgerät mit dem paketvermittelten Netz verbunden ist, umschaltbar ist und umgekehrt, also ein Betriebsmoduswechsel stattfindet.

Gemäß der Ansprüche 2 und 17 ist es dabei von Vorteil, dass mit dem Umschalten eine Priorisierung der Verbindung zum leitungsvermittelten Netz gegenüber dem paketvermittelten Netz vornehmbar ist.

Weiterhin ist es gemäß der Ansprüche 4 und 19 vorteilhaft, dass mit dem Umschalten der von der Datenendeinrichtung bislang genutzte Übertragungsweg zum leitungs- oder paketvermittelten Netz auflösbar und stattdessen ein neuer Übertragungsweg zum paket- bzw. leitungsvermittelten Netz einrichtbar ist, um wahlweise Dienste des paket- bzw. leitungsvermittelten Netzes in Anspruch nehmen zu können.

Die Erfindung besteht in der Erweiterung eines z.B. gemäß Anspruch 8 als Settop-Box, Notebook oder Personal Computer ausgebildeten Datenverarbeitungs-/Datenübertragungsgerät, bestehend aus der baulichen Einheit einer Datenübertragungseinrichtung, die z.B. als Schnurlos-Basisstation ausgebildet ist, und einem z.B. mit dem Internet vernetzten Datenverarbeitungsgerät, das vorzugsweise als Personal Computer, Notebook oder Server für den Heim- und/oder den Arbeitsplatzbereich ausgebildet ist, um eine Umschaltmöglichkeit, die gemäß der Ansprüche 10 und 11 vorzugsweise durch Software realisiert ist, so dass durch die in dem Datenverarbeitungs-/Datenübertragungsgerät verarbeiteten Sprach- und/oder Signalisierungsdatenströme neue Applikationen ermöglicht werden. Mit der so geschaffenen baulichen Einheit aus Datenübertragungseinrichtung und Datenverarbeitungsgerät können Internet- oder Personal Computer-basierende Sprach-Applikationen (wie z.B. Internettelephonie, "Voice-Messaging" etc.) durch an dem Datenverarbeitungs-/Datenübertragungsgerät betriebene Datenendeinrichtungen genutzt werden.

Dies bedeutet, dass Datenendeinrichtungen, z.B. ein Schnurlos-Mobilteil gemäß dem Anspruch 30 oder ein Telefon, eine logische Verbindung für Sprachdaten in das paketvermittelte Netz, z.B. ins Internet oder in eine lokales Datennetz des "Home Networking"-Szenarios schalten kann.

Hierdurch wird vor allem die Benutzerfreundlichkeit erhöht. Die Applikationen, die derzeit mit einer am Personal Computer betriebenen Kopfsprechgarnitur (Headset) möglich sind, können aufgrund der Erfindung auch auf einem Schnurlos-Mobilteil durchgeführt werden.

Durch die erfindungsgemäße Umschaltmöglichkeit in dem Datenverarbeitungs-/Datenübertragungsgerät mit integrierter Schnurlos-Basisstation können vom Anwender wahlweise zwei Betriebsmodi am Schnurlos-Mobilteil eingestellt werden.

In einem ersten Betriebsmodus arbeitet das Schnurlos-Mobilteil wie ein normales Telefon am leitungsvermittelten Netz.

In einem zweiten Betriebsmodus werden die Sprach- und Protokolldaten über das Datenverarbeitungs-/Datenübertragungsgerät zum Datennetz geleitet. Es besteht dabei keine Verbindung zum leitungsgebundenen Netz. Zusätzlich werden Informationen über Benutzereingaben am Schnurlos-Mobilteil an den Personal Computer des Datenverarbeitungs-/Datenübertragungsgerätes weitergeleitet und Anzeigeinformationen an das Schnurlos-Mobilteil vom Personal Computer des Datenverarbeitungs-/Datenübertragungsgerätes gesendet. Außerdem werden die Sprachkanäle transparent, über eine sogenannte Tunnelverbindung zum Personal Computer des Datenverarbeitungs-/Datenübertragungsgerätes geschaltet.

Hierdurch kann in dem Datenverarbeitungs-/Datenübertragungsgerät das mit der Schnurlos-Basisstation verbundene Schnurlos-Mobilteil eine auf dem Personal Computer laufende Applikation, wie z.B. eine Kopfsprechgarnitur (Headset) verwenden. Zusätzliche Applikationen können durch Interaktion mit dem Benutzer über Display- und Steuerdaten aktiviert werden, wodurch insbesondere die Benutzerfreundlichkeit weiter erhöht wird. So wird z.B. "Voice over Internet Protocol"-Telefonie (VoIP-Telephonie) mit einem herkömmlichen Schnurlos-Telefon möglich (Telephonie-Funktionalität allen Applikationen in einem Netzwerk (z.B. Personal Computer im Heim-Netz) zur Verfügung zu stellen). Außerdem ist es möglich, das auf diese Weise mit dem herkömmlichen Schnurlos-Telefon beispielsweise Online-Spiele durchgeführt, Sprachsteuerungen im Heim-Netz realisiert und Geräte im Heim-Netz fernbedient werden können.

Mit der Erfindung ist es beispielsweise auch möglich, konventionelle Schnurlostelefone in ein "Connected Home"-Szenario zu integrieren. Hierbei dient der Personal Computer für die "VoIP-Telephonie" als "VoIP-Gateway". Ebenso ist eine Integration in die Spiele-Konsolen, wie z.B. die X-Box, möglich.

Weiterhin bietet die Erfindung die Möglichkeit, Applikationen des Datenverarbeitungs-/Datenübertragungsgerät durch die Datenendeinrichtung basierend auf Sprachsteuerungs- und Spracherkennungsmechanismen (Voice Control and Voice Recognition) zu steuern, die Datenendeinrichtung als Fernsteuerungseinheit (Remote Control Unit) zu nutzen, den Zugang zum Messenger-Service von Microsoft über die Datenendeinrichtung herzustellen, ein Internet-Radio zu realisieren, Internet-Chatten mittels Schnurlos-Mobilteil oder Telefon durchzuführen, die Umsetzung von Textnachrichten in Sprachnachrichten ("Text to Speech") damit z.B. E-Mails vorgelesen werden können und/oder die Darstellung von Nachrichten auf dem Display der Datenendeinrichtung zu nutzen.

Die Erfindung ist aber nicht nur für den Heimbereich wie vorstehend erläutert anwendbar, wenn in dem Datenverarbeitungs-/Datenübertragungsgerät die Datenübertragungseinrichtung als Schnurlos-Basisstation und das Datenverarbeitungsgerät als Personal Computer oder Server ausgebildet sind, und die Datenendeinrichtung als Schnurlos-Mobilteil ausgebildet ist, sondern ist auch ohne weiteres für den öffentlichen Bereich, wenn in dem Datenverarbeitungs-/Datenübertragungsgerät die Datenübertragungseinrichtung als zellulare Mobilfunkinfrastruktur bestehend aus Basisstation und zentrale Vermittlungsanlage und das Datenverarbeitungsgerät als Server ausgebildet sind, und die Datenendeinrichtung als Mobilfunktelefon (Handy) ausgebildet ist, anwendbar.

Weitere vorteilhafte Weiterbildungen der Erfindung sind den übrigen Unteransprüchen und der nachfolgenden Beschreibung eines Ausführungsbeispiels der Erfindung zu entnehmen.

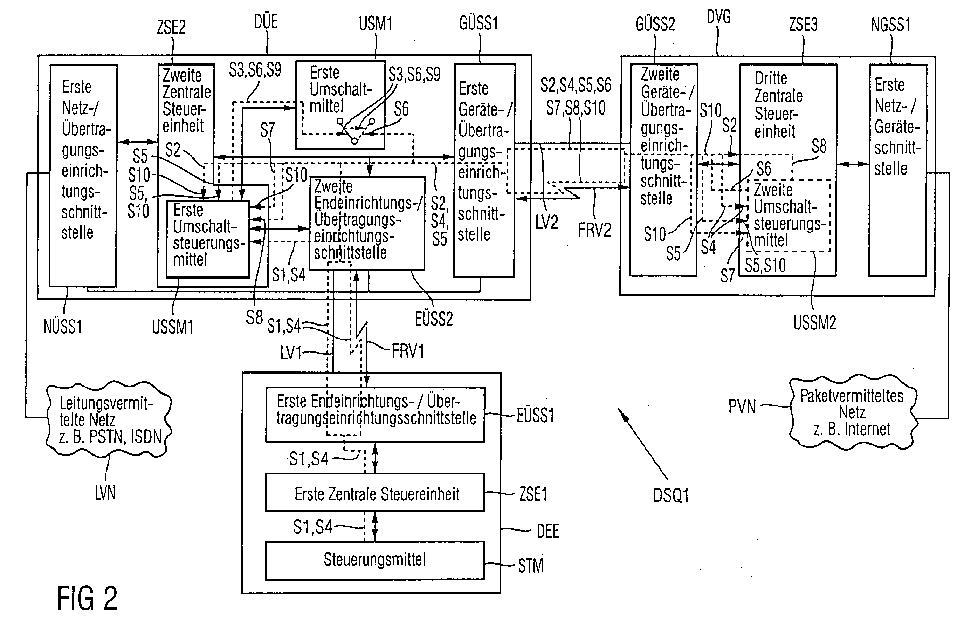

Das Ausführungsbeispiel der Erfindung wird anhand der FIGUREN 2 bis 4 beschrieben. Es zeigen:
FIGUR 2 eine erste Datensenke/-quelle für ein leitungsvermitteltes Netz und paketvermitteltes Netz bestehend aus einer Datenendeinrichtung, einer Datenübertragungseinrichtung und einem als Datenverarbeitungsgerät bezeichneten universell einsetzbaren Gerät zur automatischen Verarbeitung von Daten und zum Senden und Empfangen von Daten in das paketvermittelte bzw. aus dem paketvermittelten Netz,
FIGUR 3 ausgehend von FIGUR 2 eine zweite Datensenke/-quelle für ein leitungsvermitteltes Netz und paketvermitteltes Netz bestehend aus einer Datenendeinrichtung und einem als Datenverarbeitungs-/Datenübertragungsgerät bezeichneten universell einsetzbaren Gerät DVÜG zur automatischen Verarbeitung von Daten und zum Senden und Empfangen von Daten sowohl in das paketvermittelte bzw. aus dem paketvermittelten Netz als auch in das leitungsvermittelte bzw. aus dem leitungsvermittelten Netz,

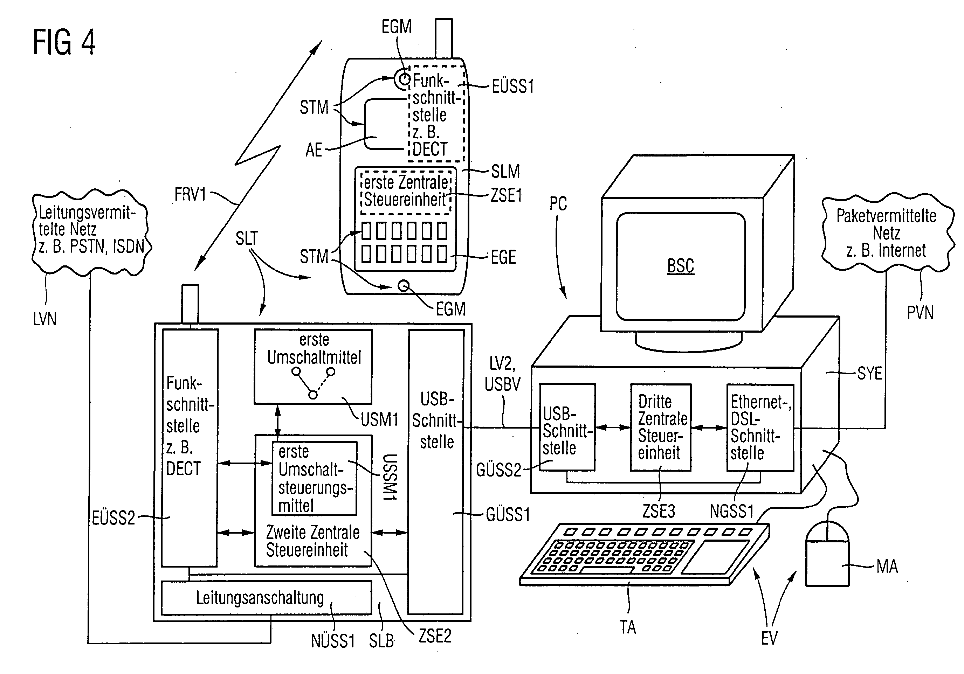

FIGUR 4 Realisierung der ersten Datensenke/-quelle mit einem Schnurlostelefon und einem Personal Computer.
FIGUR 2 zeigt eine erste Datensenke/-quelle DSQ1 für ein vorzugsweise als "Public Switched Telephone Network (PSTN)" oder "Integrated Services Digital Network (ISDN)" ausgebildetes leitungsvermitteltes Netz LVN und ein vorzugsweise als Internet ausgebildetes paketvermitteltes Netz PVN bestehend aus einer Datenendeinrichtung DEE, einer Datenübertragungseinrichtung DÜE und einem als Datenverarbeitungsgerät bezeichneten universell einsetzbaren Gerät DVG zur automatischen Verarbeitung von Daten und zum Senden und Empfangen von Daten in das paketvermittelte bzw. aus dem paketvermittelten Netz.

Die Datenendeinrichtung DEE enthält eine erste Zentrale Steuereinheit ZSE1, Steuerungsmittel STM und eine erste Endeinrichtungs-/Übertragungseinrichtungsschnittstelle EÜSS1. Die erste Zentrale Steuereinheit ZSE1, dient zur Steuerung der Funktionsabläufe in der Datenendeinrichtung DEE und ist sowohl mit den Steuerungsmitteln STM als auch mit der ersten Endeinrichtungs-/Übertragungseinrichtungsschnittstelle EÜSS1 verbunden. Über die erste Endeinrichtungs-/Übertragungseinrichtungsschnittstelle EÜSS1 ist die Datenendeinrichtung DEE mit der Datenübertragungseinrichtung DÜE verbunden, die für diese Verbindung eine zweite Endeinrichtungs-/Übertragungseinrichtungsschnittstelle EÜSS2 aufweist. Als Verbindung zwischen der Datenendeinrichtung DEE und der Datenübertragungseinrichtung DÜE ist entweder eine erste Leitungsverbindung LV1 oder eine erste Freiraumverbindung FRV1 vorgesehen.

Die Datenübertragungseinrichtung DÜE enthält neben der zweiten Endeinrichtungs-/Übertragungseinrichtungsschnittstelle EÜSS2 noch eine zweite Zentrale Steuereinheit ZSE2, eine erste Netz-/Übertragungseinrichtungsschnittstelle NÜSS1, erste Umschaltmittel USM1 und eine erste Geräte-/Übertragungseinrichtungsschnittstelle GÜSS1. Die zweite Zentrale Steuereinheit ZSE2, die zur Steuerung der Funktionsabläufe in der Datenübertragungseinrichtung DÜE dient und erste Umschaltsteuerungsmittel USSM1 aufweist, ist mit der zweiten Endeinrichtungs-/Übertragungseinrichtungsschnittstelle EÜSS2, der ersten Netz-/Übertragungseinrichtungsschnittstelle NÜSS1 und der ersten Geräte-/Übertragungseinrichtungsschnittstelle GÜSS1 verbunden. Die ersten Umschaltsteuerungsmittel USSM1 der zweiten Zentralen Steuereinheit ZSE2 bilden mit den ersten Umschaltmitteln USM1 eine Funktionseinheit derart, dass die Umschaltsteuerungsmittel USSM1 die Umschaltmittel USM1 steuern, was in der FIGUR 2 durch die Verbindung zwischen den beiden Mitteln dargestellt wird. Die Datenübertragungseinrichtung DÜE ist zum einen über die erste Netz-/Übertragungseinrichtungsschnittstelle NÜSS1 mit dem leitungsvermitteltem Netz LVN und zum anderen über die erste Geräte-/Übertragungseinrichtungsschnittstelle GÜSS1 mit dem Datenverarbeitungsgerät DVG verbunden, das für diese Verbindung eine zweite Geräte-/Übertragungseinrichtungsschnittstelle GÜSS2 aufweist. Als Verbindung zwischen der Datenübertragungseinrichtung DÜE und dem Datenverarbeitungsgerät DVG ist erneut entweder eine zweite Leitungsverbindung LV2 oder eine zweite Freiraumverbindung FRV2 vorgesehen.

Das Datenverarbeitungsgerät DVG enthält neben der zweiten Geräte-/Übertragungseinrichtungsschnittstelle GÜSS2 noch eine dritte Zentrale Steuereinheit ZSE3 und eine erste Netz-/Geräteschnittstelle NGSS1. Die dritte Zentrale Steuereinheit ZSE3, die zur Steuerung der Funktionsabläufe in dem Datenverarbeitungsgerät DVG dient und zusätzlich zu den ersten Umschaltsteuerungsmittel USSM1 der zweiten Zentralen Steuereinheit ZSE2 in der Datenübertragungseinrichtung DÜE optional in der FIGUR 2 gestrichelt eingezeichnete zweite Umschaltsteuerungsmittel USSM2 aufweist, ist mit der zweiten Geräte-/Übertragungseinrichtungsschnittstelle GÜSS2 und der ersten Netz-/Geräteschnittstelle NGSS1 verbunden. Über die erste Netz-/Geräteschnittstelle NGSS1 ist das Datenverarbeitungsgerät DVG mit dem paketvermittelten Netz PVN verbunden.

Im folgenden wird basierend auf der Erläuterung des Aufbaus der ersten Datensenke/-quelle DSQ1 die Funktionsweise der Datensenke/-quelle DSQ1 im Hinblick auf die Beseitigung der logische Trennung zwischen ersten Applikationen, die auf dem leitungsvermittelten Netz LVN basieren, und zweiten Applikationen, die auf dem paketvermittelten Netz PVN basieren, erläutert.

Aus der Sicht der Datenendeinrichtung DEE, die beispielsweise bislang über die erste Leitungsverbindung LV1 oder die erste Freiraumverbindung FRV1 und die Datenübertragungseinrichtung DÜE mit dem leitungsvermittelten Netz LVN verbunden gewesen ist (vgl. Schnurlos-Basisstation als Datenübertragungseinrichtung und Schnurlos-Mobilteil als Datenendeinrichtung in FIGUR 1), bedeutet dies, dass der Benutzer der Datenendeinrichtung DEE einerseits Dienste des leitungsvermittelten Netzes LVN und andererseits Dienste des paketvermittelten Netzes PVN jeweils als Adressat und Absender wahlweise in Anspruch nehmen kann. Mit anderen Worten der Übertragungsweg von der Datenendeinrichtung DEE zum leitungsvermittelten Netz LVN und paketvermittelten Netz PVN muss dem Benutzer jeweils wahlweise zur Verfügung stehen, also vom Benutzer bei Bedarf gewechselt werden können (Betriebsmoduswechsel der Datenendeinrichtung). So ist die Datenendeinrichtung DEE beispielsweise in einem ersten Betriebsmodus über die Datenübertragungseinrichtung DÜE mit dem leitungsvermittelten Netz LVN und in einem zweiten Betriebsmodus über die Datenübertragungseinrichtung DÜE und dem Datenverarbeitungsgerät DVG mit dem paketvermittelten Netz PVN verbunden.

Aufgrund der für das angegebene bekannte Szenario (Datenendeinrichtung ↔ leitungsvermittelte Netz) bereits bestehenden Verbindung zwischen der Datenendeinrichtung DEE und der Datenübertragungseinrichtung DÜE sind zu diesem Zweck in der Datenübertragungseinrichtung DÜE die ersten Umschaltmittel USM1 und die ersten Umschaltsteuerungsmittel USSM1, in dem Datenverarbeitungsgerät DVG gegebenenfalls die zweiten Umschaltsteuerungsmittel USSM2 und in der Datenendeinrichtung DEE die Steuerungsmittel STM vorhanden. Die genannten Mittel sind abgesehen von den Steuerungsmitteln STM in der Datenendeinrichtung DEE, die vorzugsweise als Tastatur ausgebildet sind, allesamt vorzugsweise als Programmmodule (Software) ausgebildet. An die Stelle der Tastatur ist es aber auch möglich, eine Sprachsteuerung zu verwenden.

Für jedes andere denkbare Szenario kann die Verteilung der genannten Mittel jedoch z.B. wieder anders sein. So z.B. bei einem Szenario (Datenendeinrichtung ↔ paketvermittelte Netz), wenn die Datenendeinrichtung beispielsweise über eine Leitungsverbindung oder eine Freiraumverbindung und dem Datenverarbeitungsgerät mit dem paketvermittelten Netz verbunden ist. In diesem Fall sind die Umschaltmittel und die Umschaltsteuerungsmittel vorzugsweise in dem Datenverarbeitungsgerät, während in der Datenübertragungseinrichtung gegebenenfalls zusätzliche Umschaltsteuerungsmittel vorhanden sind.

Alternativ ist auch eine Konfiguration vorstellbar, bei der die Datenübertragungseinrichtung mit dem paketvermitteltem Netz und das Datenverarbeitungsgerät mit dem leitungsvermitteltem Netz verbunden ist.

Für das der FIGUR 2 zugrunde gelegte Szenario (Datenendeinrichtung ↔ leitungsvermittelte Netz), bei dem die ersten Umschaltmittel USM1 in der Datenübertragungseinrichtung DÜE vorhanden sind, ergeben sich je nachdem, ob
(i) nur die ersten Umschaltsteuerungsmittel USSM1 in der Datenübertragungseinrichtung DÜE vorhanden sind,
(ii) sowohl die ersten Umschaltsteuerungsmittel USSM1 in der Datenübertragungseinrichtung DÜE als auch die zweiten Umschaltsteuerungsmittel USSM2 in dem Datenverarbeitungsgerät DVG vorhanden sind, wobei beide Umschaltsteuerungsmittel USSM1, USSM2 die ersten Umschaltmittel USM1 in der Datenübertragungseinrichtung DÜE steuern,
(iii) sowohl die ersten Umschaltsteuerungsmittel USSM1 in der Datenübertragungseinrichtung DÜE als auch die zweiten Umschaltsteuerungsmittel USSM2 in dem Datenverarbeitungsgerät DVG vorhanden sind, wobei jedoch im Unterschied zu (ii) nur die ersten Umschaltsteuerungsmittel USSM1 die ersten Umschaltmittel USM1 in der Datenübertragungseinrichtung DÜE steuern,
drei Varianten, wie basierend auf dem Szenario der angesprochene Betriebmoduswechsel in der ersten Datensenke/-quelle DSQ1 realisiert werden kann.

### Realisierungsvariante (i):

Für die Beschreibung dieser Realisierungsvariante sei nun angenommen, dass sich die Datenendeinrichtung DEE beispielsweise in dem ersten Betriebsmodus befindet, gemäß dem die Datenendeinrichtung DEE über die Datenübertragungseinrichtung DÜE mit dem leitungsvermittelten Netz LVN verbunden ist. Selbstverständlich ist auch der andere Fall möglich, bei dem sich die Datenendeinrichtung DEE in dem zweiten Betriebsmodus befindet.

Der Benutzer der Datenendeinrichtung DEE möchte nun in den zweiten Betriebsmodus wechseln. Der angesprochene Betriebmoduswechsel wird von dem Benutzer der Datenendeinrichtung DEE dadurch eingeleitet, dass dieser die Steuerungsmittel STM betätigt. Daraufhin wird gesteuert durch die erste Zentrale Steuereinheit ZSE1 über diese und die erste Endeinrichtungs-/Übertragungseinrichtungsschnittstelle EÜSS1 ein erstes Signal S1 zur Signalisierung des Betriebsmoduswechsels von der Datenendeinrichtung DEE über die erste Leitungsverbindung LV1 bzw. die erste Freiraumverbindung FRV1 an die zweite Endeinrichtungs-/Übertragungseinrichtungsschnittstelle EÜSS2 in der Datenübertragungseinrichtung DÜE übertragen, die das von der Datenendeinrichtung DEE übertragene erste Signal S1 an die ersten Umschaltsteuerungsmittel USSM1 weiterleitet.

Die ersten Umschaltsteuerungsmittel USSM1 erzeugen daraufhin ein zweites Signal S2, das sie an das Datenverarbeitungsgerät DVG und dort insbesondere an die dritte Zentrale Steuereinheit ZSE3 übertragen und mit dem das Datenverarbeitungsgerät DVG darüber informiert wird, dass die Datenendeinrichtung DEE über das Datenverarbeitungsgerät DVG eine Verbindung zum paketvermittelten Netz PVN aufbauen möchte. Nachdem das Datenverarbeitungsgerätes DVG informiert worden ist, erzeugen die ersten Umschaltsteuerungsmittel USSM1 ein drittes Signal S3 und übertragen dieses an die ersten Umschaltmittel USM1. Mit der Übertragung des dritten Signals S3 werden die ersten Umschaltmittel USM1 angewiesen, den von der Datenendeinrichtung DEE bislang genutzten Übertragungsweg zum leitungsvermittelten Netz LVN aufzulösen und stattdessen einen neuen Übertragungsweg über das Datenverarbeitungsgerät DVG zum paketvermittelten Netz PVN einzurichten. In der FIGUR 2 ist dieser Vorgang in den ersten Umschaltmitteln USM1 durch das Schaltersymbol angedeutet. Die Datenendeinrichtung DEE ist damit über die zweite Leitungsverbindung LV2 bzw. die zweite Freiraumverbindung FRV2 und dem Datenverarbeitungsgerät DVG mit dem paketvermittelten Netz PVN verbunden. Dieser zum zweiten Betriebsmodus gehörende Übertragungsweg bleibt nun solange geschaltet bzw. aufgebaut, bis in gleicher Weise ein erneuter Betriebsmoduswechsel, diesmal ein Wechsel vom zweiten Betriebsmodus zum ersten Betriebsmodus, vom Benutzer eingeleitet wird.

Um den Benutzer der Datenendeinrichtung darüber zu informieren, in welchem Betriebsmodus sich die Datenendeinrichtung befindet, wird der jeweilige aktivierte Betriebsmodus vorzugsweise auf einem Display der Datenendeinrichtung angezeigt (vgl. FIGUR 4). Des weiteren ist es möglich, bei Datenendeinrichtungen, die vorrangig zur Sprachübertragung (Telefonie) genutzt werden (vgl. FIGUR 4) und mit denen eine "Voice over IP"-Verbindung noch nicht möglich ist, eine Priorisierung der Verbindung zum leitungsvermittelten Netz gegenüber dem paketvermittelten Netz vorzunehmen. Dies kann z.B. durch eine zeitgesteuerte Default-Einstellung erreicht werden. Dies bedeutet, dass, wenn ein Betriebsmoduswechsel vom ersten Betriebsmodus zum zweiten Betriebsmodus wie beschrieben vorgenommen worden ist und die Datenendeinrichtung nach Beenden einer Sitzung im zweiten Betriebsmodus innerhalb einer vorgegebenen Zeit nicht wieder zurückgesetzt wird, das Zurücksetzen in den Ursprungszustand (Default-Zustand) automatisch erfolgt.

### Realisierungsvariante (ii):

Für die Beschreibung dieser Realisierungsvariante sei nun wieder angenommen, dass sich die Datenendeinrichtung DEE beispielsweise in dem ersten Betriebsmodus befindet, gemäß dem die Datenendeinrichtung DEE über die Datenübertragungseinrichtung DÜE mit dem leitungsvermittelten Netz LVN verbunden ist. Selbstverständlich ist auch wieder der andere Fall möglich, bei dem sich die Datenendeinrichtung DEE in dem zweiten Betriebsmodus befindet.

Der Benutzer der Datenendeinrichtung DEE möchte nun in den zweiten Betriebsmodus bzw. den ersten Betriebsmodus wechseln. Der jeweilige Betriebmoduswechsel wird von dem Benutzer der Datenendeinrichtung DEE dadurch eingeleitet, dass dieser die Steuerungsmittel STM betätigt. Für jeden Wechsel kann dies z.B. immer ein und dieselbe Taste bzw. Softkey-Taste sein oder es können für beide Betriebsmoduswechsel auch unterschiedliche Tasten verwendet werden. Bei der Sprachsteuerung hingegen ist die Sache eindeutig, weil immer der gesprochene Betriebsmoduswechsel umgesetzt wird.

Daraufhin wird gesteuert durch die erste Zentrale Steuereinheit ZSE1 über diese und die erste Endeinrichtungs-/Übertragungseinrichtungsschnittstelle EÜSS1 ein viertes Signal S4 zur Signalisierung des Betriebsmoduswechsels von der Datenendeinrichtung DEE über die erste Leitungsverbindung LV1 bzw. die erste Freiraumverbindung FRV1 an die zweite Endeinrichtungs-/Übertragungseinrichtungsschnittstelle EÜSS2 in der Datenübertragungseinrichtung DÜE übertragen, über die das von der Datenendeinrichtung DEE übertragene vierte Signal S4 im Fall des Wechsels zum zweiten Betriebsmodus (der aktuelle Betriebsmodus ist demnach der erste Betriebsmodus) an die ersten Umschaltsteuerungsmittel USSM1 weitergeleitet wird und im Fall des Wechsels zum ersten Betriebsmodus (der aktuelle Betriebsmodus ist demnach der zweite Betriebsmodus) über die erste Geräte-/Übertragungseinrichtungsschnittstelle GÜSS1, die zweite Leitungsverbindung LV2 bzw. die zweite Freiraumverbindung FRV2 sowie die zweite Geräte-/Übertragungseinrichtungsschnittstelle GÜSS2 in der genannten Reihenfolge an die zweiten Umschaltsteuerungsmittel USSM2 in dem Datenverarbeitungsgerät DVG weitergeleitet wird.

Die das vierte Signal S4 empfangenden ersten bzw. zweiten Umschaltsteuerungsmittel USSM1, USSM2 erzeugen daraufhin jeweils ein fünftes Signal S5, mit dem die jeweils anderen Umschaltsteuerungsmittel USSM2, USSM1 über den jeweiligen Betriebsmoduswechsel informiert werden. Das fünfte Signal S5 wird über die erste Geräte-/Übertragungseinrichtungsschnittstelle GÜSS1, die zweite Leitungsverbindung LV2 bzw. die zweite Freiraumverbindung FRV2 sowie die zweite Geräte-/Übertragungseinrichtungsschnittstelle GÜSS2 oder in umgekehrter Richtung an die betreffenden Umschaltsteuerungsmittel USSM2, USSM1 übertragen. Nachdem die betreffenden Umschaltsteuerungsmittel USSM2, USSM1 und damit das Datenverarbeitungsgerät DVG bzw. die Datenübertragungseinrichtung DÜE über den Betriebsmoduswechsel informiert worden sind, erzeugen die das vierte Signal S4 empfangenden ersten bzw. zweiten Umschaltsteuerungsmittel USSM1, USSM2 jeweils ein sechstes Signal S6 und übertragen dieses an die ersten Umschaltmittel USM1. Im Fall des Wechsels zum zweiten Betriebsmodus erzeugen die ersten Umschaltsteuerungsmittel USSM1 das sechste Signal S6, während im Fall des Wechsels zum ersten Betriebsmodus die zweiten Umschaltsteuerungsmittel USSM2 das sechste Signal S6 erzeugen. Mit der Übertragung des sechsten Signals S6 werden die ersten Umschaltmittel USM1 angewiesen, den von der Datenendeinrichtung DEE bislang genutzten Übertragungsweg zum leitungsvermittelten Netz LVN bzw. paketvermittelten Netz PVN aufzulösen und stattdessen einen neuen Übertragungsweg über das Datenverarbeitungsgerät DVG zum paketvermittelten Netz PVN bzw. über die Datenübertragungseinrichtung DÜE zum leitungsvermittelten Netz LVN einzurichten. In der FIGUR 2 ist dieser Vorgang in den ersten Umschaltmitteln USM1 wieder durch das Schaltersymbol angedeutet. Die Datenendeinrichtung DEE ist damit über die zweite Leitungsverbindung LV2 bzw. die zweite Freiraumverbindung FRV2 und dem Datenverarbeitungsgerät DVG mit dem paketvermittelten Netz PVN bzw. über die Datenübertragungseinrichtung DÜE mit dem leitungsvermittelten Netz LVN verbunden. Dieser zum zweiten Betriebsmodus bzw. zum ersten Betriebsmodus gehörende Übertragungsweg bleibt nun solange geschaltet bzw. aufgebaut, bis in gleicher Weise ein erneuter Betriebsmoduswechsel, diesmal ein Wechsel vom zweiten Betriebsmodus zum ersten Betriebsmodus bzw. vom ersten Betriebsmodus zum zweiten Betriebsmodus, vom Benutzer eingeleitet wird.

Um den Benutzer darüber zu informieren, in welchem Betriebsmodus sich die Datenendeinrichtung befindet, wird wieder der jeweilige aktivierte Betriebsmodus vorzugsweise auf einem Display der Datenendeinrichtung DEE angezeigt (vgl. FIGUR 4). Des weiteren ist es auch wieder möglich, bei Datenendeinrichtungen, die vorrangig zur Sprachübertragung (Telefonie) genutzt werden (vgl. FIGUR 4) und mit denen eine "Voice over IP"-Verbindung noch nicht möglich ist, eine Priorisierung der Verbindung zum leitungsvermittelten Netz gegenüber dem paketvermittelten Netz vorzunehmen. Dies kann z.B. durch eine zeitgesteuerte Default-Einstellung erreicht werden. Dies bedeutet, dass, wenn ein Betriebsmoduswechsel vom ersten Betriebsmodus zum zweiten Betriebsmodus bzw. vom zweiten Betriebsmodus zum ersten Betriebsmodus wie beschrieben vorgenommen worden ist und die Datenendeinrichtung nach Beenden einer Sitzung im zweiten Betriebsmodus bzw. im ersten Betriebsmodus innerhalb einer vorgegebenen Zeit nicht wieder zurückgesetzt wird, der Zurücksetzvorgang in den Ursprungszustand (Default-Zustand) automatisch erfolgt.

### Realisierungsvariante (iii):

Für die Beschreibung dieser Realisierungsvariante sei nun wieder angenommen, dass sich die Datenendeinrichtung DEE beispielsweise in dem ersten Betriebsmodus befindet, gemäß dem die Datenendeinrichtung DEE über die Datenübertragungseinrichtung DÜE mit dem leitungsvermittelten Netz LVN verbunden ist. Selbstverständlich ist auch wieder der andere Fall möglich, bei dem sich die Datenendeinrichtung DEE in dem zweiten Betriebsmodus befindet.

Der Benutzer der Datenendeinrichtung DEE möchte nun in den zweiten Betriebsmodus bzw. den ersten Betriebsmodus wechseln. Der jeweilige Betriebmoduswechsel wird von dem Benutzer der Datenendeinrichtung DEE dadurch eingeleitet, dass dieser die Steuerungsmittel STM betätigt. Für jeden Wechsel kann dies z.B. immer ein und dieselbe Taste bzw. Softkey-Taste sein oder es können für beide Betriebsmoduswechsel auch unterschiedliche Tasten verwendet werden. Bei der Sprachsteuerung hingegen ist die Sache eindeutig, weil immer der gesprochene Betriebsmoduswechsel umgesetzt wird.

Daraufhin wird wieder gesteuert durch die erste Zentrale Steuereinheit ZSE1 über diese und die erste Endeinrichtungs-/Übertragungseinrichtungsschnittstelle EÜSS1 wieder das vierte Signal S4 zur Signalisierung des Betriebsmoduswechsels von der Datenendeinrichtung DEE über die erste Leitungsverbindung LV1 bzw. die erste Freiraumverbindung FRV1 an die zweite Endeinrichtungs-/Übertragungseinrichtungsschnittstelle EÜSS2 in der Datenübertragungseinrichtung DÜE übertragen, über die das von der Datenendeinrichtung DEE übertragene vierte Signal S4 im Fall des Wechsels zum zweiten Betriebsmodus (der aktuelle Betriebsmodus ist demnach der erste Betriebsmodus) wieder an die ersten Umschaltsteuerungsmittel USSM1 weitergeleitet wird und im Fall des Wechsels zum ersten Betriebsmodus (der aktuelle Betriebsmodus ist demnach der zweite Betriebsmodus) wieder über die erste Geräte-/Übertragungseinrichtungsschnittstelle GÜSS1, die zweite Leitungsverbindung LV2 bzw. die zweite Freiraumverbindung FRV2 sowie die zweite Geräte-/Übertragungseinrichtungsschnittstelle GÜSS2 in der genannten Reihenfolge wieder an die zweiten Umschaltsteuerungsmittel USSM2 in dem Datenverarbeitungsgerät DVG weitergeleitet wird.

Die das vierte Signal S4 empfangenden ersten Umschaltsteuerungsmittel USSM1 erzeugen daraufhin ein siebtes Signal S7, mit dem diese die zweiten Umschaltsteuerungsmittel USSM2 über den ihnen signalisierten Betriebsmoduswechsel informieren. Das siebte Signal S7 wird über die erste Geräte-/Übertragungseinrichtungsschnittstelle GÜSS1, die zweite Leitungsverbindung LV2 bzw. die zweite Freiraumverbindung FRV2 sowie die zweite Geräte-/Übertragungseinrichtungsschnittstelle GÜSS2 an die zweiten Umschaltsteuerungsmittel USSM2 übertragen. Nachdem die zweiten Umschaltsteuerungsmittel USSM2 und damit das Datenverarbeitungsgerät DVG über den Betriebsmoduswechsel informiert worden sind, erzeugen die das siebte Signal S7 empfangenden zweiten Umschaltsteuerungsmittel USSM2 ein achtes Signal S8 und übertragen dieses über die zweite Geräte-/Übertragungseinrichtungsschnittstelle GÜSS2, die zweite Leitungsverbindung LV2 bzw. die zweite Freiraumverbindung FRV2 sowie die erste Geräte-/Übertragungseinrichtungsschnittstelle GÜSS1 in der genannten Reihenfolge an die ersten Umschaltsteuerungsmittel USSM1. Mit diesem achten Signal S8 signalisieren die zweiten Umschaltsteuerungsmittel USSM2 den ersten Umschaltsteuerungsmittel USSM1, dass diese den Wechsel von dem zweiten Betriebsmodus in den ersten Betriebsmodus den ersten Umschaltmitteln USM1 signalisieren und somit steuern sollen. Die ersten Umschaltsteuerungsmittel USSM1 erzeugen daraufhin ein neuntes Signal S9 und übertragen dieses an die ersten Umschaltmittel USM1. Mit der Übertragung des neunten Signals S9 werden die ersten Umschaltmittel USM1 angewiesen, den von der Datenendeinrichtung DEE bislang genutzten Übertragungsweg zum leitungsvermittelten Netz LVN bzw. paketvermittelten Netz PVN aufzulösen und stattdessen einen neuen Übertragungsweg über das Datenverarbeitungsgerät DVG zum paketvermittelten Netz PVN bzw. über die Datenübertragungseinrichtung DÜE zum leitungsvermittelten Netz LVN einzurichten. In der FIGUR 2 ist dieser Vorgang in den ersten Umschaltmitteln USM1 wieder durch das Schaltersymbol angedeutet. Die Datenendeinrichtung DEE ist damit über die zweite Leitungsverbindung LV2 bzw. die zweite Freiraumverbindung FRV2 und dem Datenverarbeitungsgerät DVG mit dem paketvermittelten Netz PVN bzw. über die Datenübertragungseinrichtung DÜE mit dem leitungsvermittelten Netz LVN verbunden. Dieser zum zweiten Betriebsmodus bzw. zum ersten Betriebsmodus gehörende Übertragungsweg bleibt nun solange geschaltet bzw. aufgebaut, bis in gleicher Weise ein erneuter Betriebsmoduswechsel, diesmal ein Wechsel vom zweiten Betriebsmodus zum ersten Betriebsmodus bzw. vom ersten Betriebsmodus zum zweiten Betriebsmodus, vom Benutzer eingeleitet wird.

Um den Benutzer darüber zu informieren, in welchem Betriebsmodus sich die Datenendeinrichtung befindet, wird wieder der jeweilige aktivierte Betriebsmodus vorzugsweise auf einem Display der Datenendeinrichtung DEE angezeigt (vgl. FIGUR 4). Des weiteren ist es auch wieder möglich, bei Datenendeinrichtungen, die vorrangig zur Sprachübertragung (Telefonie) genutzt werden (vgl. FIGUR 4) und mit denen eine "Voice over IP"-Verbindung noch nicht möglich ist, eine Priorisierung der Verbindung zum leitungsvermittelten Netz gegenüber dem paketvermittelten Netz vorzunehmen. Dies kann z.B. durch eine zeitgesteuerte Default-Einstellung erreicht werden. Dies bedeutet, dass, wenn ein Betriebsmoduswechsel vom ersten Betriebsmodus zum zweiten Betriebsmodus bzw. vom zweiten Betriebsmodus zum ersten Betriebsmodus wie beschrieben vorgenommen worden ist und die Datenendeinrichtung nach Beenden einer Sitzung im zweiten Betriebsmodus bzw. im ersten Betriebsmodus innerhalb einer vorgegebenen Zeit nicht wieder zurückgesetzt wird, der Zurücksetzvorgang in den Ursprungszustand (Default-Zustand) automatisch erfolgt.

Bei den vorgestellten Realisierungsvarianten (i), (ii) und (iii) ist es von Vorteil, wenn die mit den Signalen S2, S5, S7, S8 signalisierten Betriebsmoduswechsel von den diese Signale empfangenden Umschaltsteuerungsmitteln jeweils mit einem zehnten Signal S10 bestätigt werden, bevor der Betriebsmoduswechsel durch die ersten Umschaltmittel USM1 durchgeführt wird.

FIGUR 3 zeigt eine zweite Datensenke/-quelle DSQ2 für ein vorzugsweise als "Public Switched Telephone Network (PSTN)" oder "Integrated Services Digital Network (ISDN)" ausgebildetes leitungsvermitteltes Netz LVN und ein vorzugsweise als Internet ausgebildetes paketvermitteltes Netz PVN bestehend aus einer Datenendeinrichtung DEE und einem als Datenverarbeitungs-/Datenübertragungsgerät bezeichneten universell einsetzbaren Gerät DVÜG zur automatischen Verarbeitung von Daten und zum Senden und Empfangen von Daten sowohl in das paketvermittelte bzw. aus dem paketvermittelten Netz als auch in das leitungsvermittelte bzw. aus dem leitungsvermittelten Netz. In dem Datenverarbeitungs-/Datenübertragungsgerät DVÜG sind das in der FIGUR 2 dargestellte Datenverarbeitungsgerät DVG und die in der FIGUR 2 dargestellte Datenübertragungseinrichtung DÜE zur Bildung einer baulichen und funktionalen Einheit zusammengefasst.

Die Datenendeinrichtung DEE enthält die erste Zentrale Steuereinheit ZSE1, die Steuerungsmittel STM und die erste Endeinrichtungs-/Übertragungseinrichtungsschnittstelle EÜSS1. Die erste Zentrale Steuereinheit ZSE1, dient zur Steuerung der Funktionsabläufe in der Datenendeinrichtung DEE und ist sowohl mit den Steuerungsmitteln STM als auch mit der ersten Endeinrichtungs-/Übertragungseinrichtungsschnittstelle EÜSS1 verbunden. Über die erste Endeinrichtungs-/Übertragungseinrichtungsschnittstelle EÜSS1 ist die Datenendeinrichtung DEE mit dem Datenverarbeitungs-/Datenübertragungsgerät DVÜG verbunden, das für diese Verbindung eine dritte Endeinrichtungs-/Übertragungseinrichtungsschnittstelle EÜSS3 aufweist. Als Verbindung zwischen der Datenendeinrichtung DEE und dem Datenverarbeitungs-/Datenübertragungsgerät DVÜG ist entweder wieder die erste Leitungsverbindung LV1 oder die erste Freiraumverbindung FRV1 vorgesehen.

Das Datenverarbeitungs-/Datenübertragungsgerät DVÜG enthält neben der dritten Endeinrichtungs-/Übertragungseinrichtungsschnittstelle EÜSS3 noch eine vierte Zentrale Steuereinheit ZSE4, eine zweite Netz-/Übertragungseinrichtungsschnittstelle NÜSS2, zweite Umschaltmittel USM2 und eine zweite Netz-/Geräteschnittstelle NGSS2. Die vierte Zentrale Steuereinheit ZSE4, die zur Steuerung der Funktionsabläufe in dem Datenverarbeitungs-/Datenübertragungsgerät DVÜG dient und dritte Umschaltsteuerungsmittel USSM3 aufweist, ist mit der dritten Endeinrichtungs-/Übertragungseinrichtungsschnittstelle EÜSS3, der zweiten Netz-/Übertragungseinrichtungsschnittstelle NÜSS2 und der zweiten Netz-/Geräteschnittstelle NGSS2 verbunden.

Die dritten Umschaltsteuerungsmittel USSM3 der vierten Zentralen Steuereinheit ZSE4 bilden mit den zweiten Umschaltmitteln USM2 eine Funktionseinheit derart, dass die Umschaltsteuerungsmittel USSM3 die Umschaltmittel USM1 steuern, was in der FIGUR 3 durch die Verbindung zwischen den beiden Mitteln dargestellt wird. Das Datenverarbeitungs-/Datenübertragungsgerät DVÜG ist zum einen über die zweite Netz-/Übertragungseinrichtungsschnittstelle NÜSS2 mit dem leitungsvermitteltem Netz LVN und zum anderen über die zweite Netz-/Geräteschnittstelle NGSS2 mit dem paketvermitteltem Netz PVN verbunden.

Im folgenden wird basierend auf der Erläuterung des Aufbaus der zweiten Datensenke/-quelle DSQ2 die Funktionsweise der Datensenke/-quelle DSQ2 im Hinblick auf die Beseitigung der logische Trennung zwischen ersten Applikationen, die auf dem leitungsvermittelten Netz LVN basieren, und zweiten Applikationen, die auf dem paketvermittelten Netz PVN basieren, erläutert.

Für das in der FIGUR 3 dargestellte Szenario sei nun angenommen, dass sich die Datenendeinrichtung DEE beispielsweise in dem ersten Betriebsmodus befindet, gemäß dem die Datenendeinrichtung DEE über das Datenverarbeitungs-/Datenübertragungsgerät DVÜG mit dem leitungsvermittelten Netz LVN verbunden ist. Selbstverständlich ist auch der andere Fall möglich, bei dem sich die Datenendeinrichtung DEE in dem zweiten Betriebsmodus befindet.

Der Benutzer der Datenendeinrichtung DEE möchte nun in den zweiten Betriebsmodus wechseln. Der angesprochene Betriebmoduswechsel wird von dem Benutzer der Datenendeinrichtung DEE dadurch eingeleitet, dass dieser die Steuerungsmittel STM betätigt. Daraufhin wird gesteuert durch die erste Zentrale Steuereinheit ZSE1 über diese und die erste Endeinrichtungs-/Übertragungseinrichtungsschnittstelle EÜSS1 ein elftes Signal S11 zur Signalisierung des Betriebsmoduswechsels von der Datenendeinrichtung DEE über die erste Leitungsverbindung LV1 bzw. die erste Freiraumverbindung FRV1 an die dritte Endeinrichtungs-/Übertragungseinrichtungsschnittstelle EÜSS3 in dem Datenverarbeitungs-/Datenübertragungsgerät DVÜG übertragen, das das von der Datenendeinrichtung DEE übertragene elfte Signal S11 an die dritten Umschaltsteuerungsmittel USSM3 weiterleitet.

Die dritten Umschaltsteuerungsmittel USSM3 erzeugen daraufhin ein zwölftes Signal S12 und übertragen dieses an die zweiten Umschaltmittel USM2. Mit der Übertragung des zwölften Signals S12 werden die zweiten Umschaltmittel USM2 angewiesen, den von der Datenendeinrichtung DEE bislang genutzten Übertragungsweg zum leitungsvermittelten Netz LVN aufzulösen und stattdessen einen neuen Übertragungsweg zum paketvermittelten Netz PVN einzurichten. In der FIGUR 3 ist dieser Vorgang in den zweiten Umschaltmitteln USM2 durch das Schaltersymbol angedeutet. Die Datenendeinrichtung DEE ist damit mit dem paketvermittelten Netz PVN verbunden. Dieser zum zweiten Betriebsmodus gehörende Übertragungsweg bleibt nun solange geschaltet bzw. aufgebaut, bis in gleicher Weise ein erneuter Betriebsmoduswechsel, diesmal ein Wechsel vom zweiten Betriebsmodus zum ersten Betriebsmodus, vom Benutzer eingeleitet wird.

Um den Benutzer der Datenendeinrichtung darüber zu informieren, in welchem Betriebsmodus sich die Datenendeinrichtung befindet, wird der jeweilige aktivierte Betriebsmodus vorzugsweise auf einem Display der Datenendeinrichtung angezeigt (vgl. FIGUR 4). Des weiteren ist es möglich, bei Datenendeinrichtungen, die vorrangig zur Sprachübertragung (Telefonie) genutzt werden (vgl. FIGUR 4) und mit denen eine "Voice over IP"-Verbindung noch nicht möglich ist, eine Priorisierung der Verbindung zum leitungsvermittelten Netz gegenüber dem paketvermittelten Netz vorzunehmen. Dies kann z.B. durch eine zeitgesteuerte Default-Einstellung erreicht werden. Dies bedeutet, dass, wenn ein Betriebsmoduswechsel vom ersten Betriebsmodus zum zweiten Betriebsmodus wie beschrieben vorgenommen worden ist und die Datenendeinrichtung nach Beenden einer Sitzung im zweiten Betriebsmodus innerhalb einer vorgegebenen Zeit nicht wieder zurückgesetzt wird, das Zurücksetzen in den Ursprungszustand (Default-Zustand) automatisch erfolgt.

FIGUR 4 zeigt die Realisierung der ersten Datensenke/-quelle DSQ1 in der FIGUR 2 gemäß der Realisierungsvariante (i) mit einem Schnurlostelefon SLT als Datenendeinrichtung und Datenübertragungseinrichtung, das mit dem leitungsvermittelten Netz LVN verbunden ist, sowie einem Personal Computer PC als Datenverarbeitungsgerät, der mit dem paketvermittelten Netz PVN verbunden ist. Der Personal Computer PC weist neben einem Bildschirm BSC (Monitor), einer Eingabevorrichtung EV, bestehend aus einer Tastatur TA und einer "Maus" MA, in einer Systemeinheit SYE, die aus der FIGUR 2 bekannten Einrichtungen auf. So sind in der Systemeinheit SYE neben der dritten Zentralen Steuereinheit ZSE3, auch die als USB-Schnittstelle (Universal Serial Bus) ausgebildete zweite Geräte-/Übertragungseinrichtungsschnittstelle GÜSS2 und die als Ethernet-, DSL-Schnittstelle (Digital Subscriber Line) ausgebildete erste Netz-/Geräteschnittstelle NGSS1 angeordnet. Über eine USB-Verbindung USBV, LV2 als zweite Leitungsverbindung ist der Personal Computer PC mit dem Schnurlostelefon SLT verbunden. Das Schnurlostelefon SLT weist als Datenübertragungseinrichtung eine Schnurlos-Basisstation SLB und als Datenendeinrichtung eine Schnurlos-Mobilteil SLM auf, die über eine Funkverbindung FRV1 als erste Freiraumverbindung miteinander verbunden sind. Das Schnurlos-Mobilteil SLM weist neben einer Anzeigeeinrichtung AE (Display), einer als Tastatur ausgebildeten Eingabeeinheit EGE und aus einem Mikrofon und einer Hörkapsel bestehenden Eingabemitteln EGM die erste Zentrale Steuereinheit ZSE1 und als erste Endeinrichtungs-/Übertragungseinrichtungsschnittstelle eine erste Funkschnittstelle EÜSS1 auf. Die Anzeigeeinrichtung AE, die Eingabeeinheit EGE und die Eingabemittel EGM bilden die in der FIGUR 2 dargestellten Steuerungsmittel STM. In der Schnurlos-Basisstation SLB sind die zweite Zentrale Steuereinheit ZSE2 mit den ersten Umschaltsteuerungsmitteln USSM1, die ersten Umschaltmittel USM1, eine als zweite Endeinrichtungs-/Übertragungseinrichtungsschnittstelle ausgebildete zweite Funkschnittstelle EÜSS2, eine als erste Netz-/Übertragungseinrichtungsschnittstelle ausgebildete Leitungsanschaltung NÜSS1 und eine weitere als erste Geräte-/Übertragungseinrichtungsschnittstelle ausgebildete USB-Schnittstelle GÜSS1 angeordnet. Über die Leitungsanschaltung NÜSS1 wird die Verbindung zum leitungsvermittelten Netz LVN hergestellt und die USB-Schnittstelle GÜSS1 ist über die USB-Verbindung USBV, LV2 mit der in dem Personal Computer PC angeordneten USB-Schnittstelle GÜSS2 verbunden.

Wird die Schnurlos-Basisstation SLB als Schnurlos-Datenadapter in den Personal Computer PC integriert, so erhält man die zweite Datensenke/-quelle DSQ2 gemäß FIGUR 3.

## Patentansprüche

1. Datenverarbeitungs-/Datenübertragungsgerät für ein leitungsvermitteltes Netz und paketvermitteltes Netz,
a) das bezeichnet als universell einsetzbares Gerät (DVÜG) zur automatischen Verarbeitung von Daten und zum Senden und Empfangen von Daten in das paketvermittelte bzw. aus dem paketvermittelten Netz (PVN) sowie in das leitungsvermittelte bzw. aus dem leitungsvermittelten Netz (LVN) sowohl dem paketvermittelten Netz (PVN) zuordbar als auch mit dem leitungsvermittelten Netz (LVN) verbindbar ist,
b) dem mindestens eine Datenendeinrichtung (DEE) zum Senden und Empfangen von Daten sowohl in das leitungsvermittelte bzw. aus dem leitungsvermittelten Netz (LVN) als auch in das paketvermittelte bzw. aus dem paketvermittelten Netz (PVN) zuordbar ist,
**dadurch gekennzeichnet, dass**
c) Umschaltmittel (USM2) vorhanden sind, die derart steuerbar sind, dass die Datenendeinrichtung (DEE), das in einem ersten Betriebsmodus zum Senden und Empfangen von Daten über das Datenverarbeitungs-/Datenübertragungsgerät (DVÜG) mit dem leitungsvermittelten Netz (LVN) verbunden ist, aus dem ersten Betriebsmodus in einen zweiten Betriebsmodus, in dem die Datenendeinrichtung (DEE) zum Senden und Empfangen von Daten über das Datenverarbeitungs-/Datenübertragungsgerät (DVÜG) mit dem paketvermittelten Netz (PVN) verbunden ist, umschaltbar ist und umgekehrt.

2. Datenverarbeitungs-/Datenübertragungsgerät nach Anspruch 1, **dadurch gekennzeichnet, dass**
mit dem Umschalten eine Priorisierung der Verbindung zum leitungsvermittelten Netz gegenüber dem paketvermittelten Netz vornehmbar ist.

3. Datenverarbeitungs-/Datenübertragungsgerät nach Anspruch 2, **dadurch gekennzeichnet, dass**
die Priorisierung durch eine zeitgesteuerte Default-Einstellung erreichbar ist, bei der, wenn ein Betriebsmoduswechsel vom ersten Betriebsmodus zum zweiten Betriebsmodus stattgefunden hat und die Datenendeinrichtung (DEE) nach Beenden einer Verbindungssitzung im zweiten Betriebsmodus nicht innerhalb einer vorgegebenen Zeit wieder zurückgesetzt ist, das Zurücksetzen in den ersten Betriebsmodus automatisch erfolgt.

4. Datenverarbeitungs-/Datenübertragungsgerät nach Anspruch 1, 2 oder 3, **dadurch gekennzeichnet, dass**
mit dem Umschalten der von der Datenendeinrichtung (DEE) bislang genutzte Übertragungsweg zum leitungs- oder paketvermittelten Netz auflösbar und stattdessen ein neuer Übertragungsweg zum paket- bzw. leitungsvermittelten Netz einrichtbar ist, um wahlweise Dienste des paket- bzw. leitungsvermittelten Netzes in Anspruch nehmen zu können.

5. Datenverarbeitungs-/Datenübertragungsgerät nach Anspruch 1, **dadurch gekennzeichnet, dass**
eine erste Leitungsverbindung (LV1) vorhanden ist, über die das Datenverarbeitungs-/Datenübertragungsgerät (DVÜG) mit der Datenendeinrichtung (DEE) verbunden ist.

6. Datenverarbeitungs-/Datenübertragungsgerät nach Anspruch 1, **dadurch gekennzeichnet, dass**
eine erste Freiraumverbindung (FRV1) vorhanden ist, über die das Datenverarbeitungs-/Datenübertragungsgerät (DVÜG) mit der Datenendeinrichtung (DEE) verbunden ist.

7. Datenverarbeitungs-/Datenübertragungsgerät nach Anspruch 1, **dadurch gekennzeichnet, dass**
die Datenendeinrichtung (DEE) zur Bildung einer baulichen, funktionalen Einheit in das Datenverarbeitungs-/Datenübertragungsgerät (DVÜG) integriert ist.

8. Datenverarbeitungs-/Datenübertragungsgerät nach Anspruch 1, **dadurch gekennzeichnet, dass**
das Datenverarbeitungs-/Datenübertragungsgerät (DVÜG) als Settop-Box, Notebook oder Personal Computer ausgebildet ist.

9. Datenverarbeitungs-/Datenübertragungsgerät nach Anspruch 1, **dadurch gekennzeichnet, dass**
dritte Umschaltsteuerungsmittel (USSM3) vorhanden sind, die mit den Umschaltmitteln (USM2) sowie Steuerungsmitteln (STM) und einer ersten Zentralen Steuereinheit (ZSE1) in der Datenendeinrichtung (DEE) eine Funktionseinheit bilden, wobei die Funktionseinheit derart beschaffen ist, dass
a) den dritten Umschaltsteuerungsmitteln (USSM3) von den Steuerungsmittel (STM) und der ersten Zentralen Steuereinheit (ZSE1) ein Betriebsmoduswechsel signalisiert wird,
b) die dritten Umschaltsteuerungsmittel (USSM3) die Umschaltmittel (USM2) für den signalisierten Betriebsmoduswechsel steuern.

10. Datenverarbeitungs-/Datenübertragungsgerät nach Anspruch 1 oder 9, **dadurch gekennzeichnet, dass** die Umschaltmittel (USM2) als Software-Module ausgebildet sind.

11. Datenverarbeitungs-/Datenübertragungsgerät nach Anspruch 9, **dadurch gekennzeichnet, dass**
die Umschaltsteuerungsmittel (USSM3) als Software-Module ausgebildet sind.

12. Datenverarbeitungs-/Datenübertragungsgerät nach Anspruch 9, **dadurch gekennzeichnet, dass**
die dritten Umschaltsteuerungsmittel (USSM3) in einer vierten Zentralen Steuereinheit (ZSE4) zur Steuerung der Funktionsabläufe enthalten sind.

13. Datenverarbeitungs-/Datenübertragungsgerät nach Anspruch 6, **dadurch gekennzeichnet, dass**
das Datenverarbeitungs-/Datenübertragungsgerät (DVÜG) einen integrierten Schnurlos-Datenadapter aufweist.

14. Datenverarbeitungs-/Datenübertragungsgerät nach Anspruch 1, **dadurch gekennzeichnet, dass**
die Daten als Sprach- und/oder Paketdaten ausgebildet sind.

15. Datenendeinrichtung für ein leitungs- und paketvermitteltes Netz, die zum Senden und Empfangen von Daten sowohl in das leitungsvermittelte bzw. aus dem leitungsvermittelten Netz (LVN) als auch in das paketvermittelte bzw. aus dem paketvermittelten Netz (PVN) einer Datenübertragungseinrichtung (DÜE) zum Senden und Empfangen von Daten in das leitungsvermittelte bzw. aus dem leitungsvermittelten Netz (LVN) zuordbar ist, wobei die Datenübertragungseinrichtung (DÜE) mit dem leitungsvermittelten Netz (LVN) verbindbar und einem als Datenverarbeitungsgerät bezeichneten, universell einsetzbaren Gerät (DVG) zur automatischen Verarbeitung von Daten und zum Senden und Empfangen von Daten in das paketvermittelte bzw. aus dem paketvermittelten Netz (PVN) zuordbar ist, das wiederum dem paketvermittelten Netz (PVN) zuordbar ist, **gekennzeichnet durch**
Steuerungsmittel (STM) und eine erste Zentrale Steuereinheit (ZSE1) zur Steuerung der Funktionsabläufe in der Datenendeinrichtung (DEE), die miteinander verbunden sind und mit denen Umschaltmittel (USM1) der Datenübertragungseinrichtung (DÜE) derart steuerbar sind, dass die Datenendeinrichtung (DEE), die in einem ersten Betriebsmodus zum Senden und Empfangen von Daten über die Datenübertragungseinrichtung (DÜE) mit dem leitungsvermittelten Netz (LVN) verbunden ist, aus dem ersten Betriebsmodus in einen zweiten Betriebsmodus, in dem die Datenendeinrichtung (DEE) zum Senden und Empfangen von Daten über die Datenübertragungseinrichtung (DÜE) und dem Datenverarbeitungsgerät (DVG) mit dem paketvermittelten Netz (PVN) verbunden ist, umschaltbar ist und umgekehrt.

16. Datenendeinrichtung für ein leitungs- und paketvermitteltes Netz, die zum Senden und Empfangen von Daten sowohl in das leitungsvermittelte bzw. aus dem leitungsvermittelten Netz (LVN) als auch in das paketvermittelte bzw. aus dem paketvermittelten Netz (PVN) einem als Datenverarbeitungs-/Datenübertragungsgerät bezeichneten, universell einsetzbaren Gerät (DVÜG) zur automatischen Verarbeitung von Daten und zum Senden und Empfangen von Daten in das paketvermittelte bzw.
aus dem paketvermittelten Netz (PVN) sowie in das leitungsvermittelte bzw. aus dem leitungsvermittelten Netz (LVN) zugeordnet ist, wobei das Datenverarbeitungs-/Datenübertragungsgerät (DVÜG) dem paketvermittelten Netz (PVN) zuordbar und mit dem leitungsvermittelten Netz (LVN) verbindbar ist, **gekennzeichnet durch**
Steuerungsmittel (STM) und eine erste Zentrale Steuereinheit (ZSE1) zur Steuerung der Funktionsabläufe in der Datenendeinrichtung (DEE), die miteinander verbunden sind und mit denen Umschaltmittel (USM2) des Datenverarbeitungs-/Datenübertragungsgerät (DVÜG) derart steuerbar sind, dass die Datenendeinrichtung (DEE), die in einem ersten Betriebsmodus zum Senden und Empfangen von Daten über das Datenverarbeitungs-/Datenübertragungsgerät (DVÜG)mit dem leitungsvermittelten Netz (LVN) verbunden ist, aus dem ersten Betriebsmodus in einen zweiten Betriebsmodus, in dem die Datenendeinrichtung (DEE) zum Senden und Empfangen von Daten über das Datenverarbeitungs-/Datenübertragungsgerät (DVÜG) mit dem paketvermittelten Netz (PVN) verbunden ist, umschaltbar ist und umgekehrt.

17. Datenendeinrichtung nach Anspruch 15 oder 16, **dadurch gekennzeichnet, dass**
mit dem Umschalten eine Priorisierung der Verbindung zum leitungsvermittelten Netz gegenüber dem paketvermittelten Netz vornehmbar ist.

18. Datenendeinrichtung nach Anspruch 17, **dadurch gekennzeichnet, dass**
die Priorisierung durch eine zeitgesteuerte Default-Einstellung erreichbar ist, bei der, wenn ein Betriebsmoduswechsel vom ersten Betriebsmodus zum zweiten Betriebsmodus stattgefunden hat und die Datenendeinrichtung (DEE) nach Beenden einer Verbindungssitzung im zweiten Betriebsmodus nicht innerhalb einer vorgegebenen Zeit wieder zurückgesetzt ist, das Zurücksetzen in den ersten Betriebsmodus automatisch erfolgt.

19. Datenendeinrichtung nach Anspruch 15, 16, 17 oder 18, **dadurch gekennzeichnet, dass**
mit dem Umschalten der von der Datenendeinrichtung (DEE) bislang genutzte Übertragungsweg zum leitungs- oder paketvermittelten Netz auflösbar und stattdessen ein neuer Übertragungsweg zum paket- bzw. leitungsvermittelten Netz einrichtbar ist, um wahlweise Dienste des paket- bzw. leitungsvermittelten Netzes in Anspruch nehmen zu können.

20. Datenendeinrichtung nach Anspruch 15 oder 16, **dadurch gekennzeichnet, dass**
die Steuerungsmittel (STM) als eine Taste auf der Tastatur der Datenendeinrichtung (DEE) oder als eine Softkey-Taste oder durch eine in der Datenendeinrichtung (DEE) implementierte Sprachsteuerung ausgebildet sind.

21. Datenendeinrichtung nach Anspruch 15 oder 20, **dadurch gekennzeichnet, dass**
die Steuerungsmittel (STM) und die erste Zentrale Steuereinheit (ZSE1) mit ersten Umschaltsteuerungsmittel (USSM1) und den Umschaltmitteln (USM1) in der Datenübertragungseinrichtung (DÜE) eine Funktionseinheit bilden, wobei die Funktionseinheit derart beschaffen ist, dass
die Steuerungsmittel (STM) und die erste Zentrale Steuereinheit (ZSE1) den ersten Umschaltsteuerungsmitteln (USSM1) einen Betriebsmoduswechsel signalisieren (S1).

22. Datenendeinrichtung nach Anspruch 15 oder 20, **dadurch gekennzeichnet, dass**
die Steuerungsmittel (STM) und die erste Zentrale Steuereinheit (ZSE1) mit ersten Umschaltsteuerungsmittel (USSM1) in der Datenübertragungseinrichtung (DÜE) und zweiten Umschaltsteuerungsmittel (USSM2) in dem Datenverarbeitungsgerät (DVG) sowie den Umschaltmitteln (USM1) in der Datenübertragungseinrichtung (DÜE) eine Funktionseinheit bilden, wobei die Funktionseinheit derart beschaffen ist, dass
die Steuerungsmittel (STM) und die erste Zentrale Steuereinheit (ZSE1), wenn sich die Datenendeinrichtung (DEE) aktuell im ersten Betriebsmodus befindet, den ersten Umschaltsteuerungsmitteln (USSM1) in der Datenübertragungseinrichtung (DÜE) einen Betriebsmoduswechsel signalisieren oder, wenn sich die Datenendeinrichtung (DEE) aktuell im zweiten Betriebsmodus befindet, den zweiten Umschaltsteuerungsmitteln (USSM2) in dem Datenverarbeitungsgerät (DVG) einen Betriebsmoduswechsel signalisieren (S4).

23. Datenendeinrichtung nach Anspruch 16 oder 20, **dadurch gekennzeichnet, dass**
die Steuerungsmittel (STM) und die erste Zentrale Steuereinheit (ZSE1) mit dritten Umschaltsteuerungsmittel (USSM3) und den Umschaltmitteln (USM2) in dem Datenverarbeitungs-/Datenübertragungsgerät (DVÜG) eine Funktionseinheit bilden, wobei die Funktionseinheit derart beschaffen ist, dass
a) den dritten Umschaltsteuerungsmitteln (USSM3) von den Steuerungsmittel (STM) und der ersten Zentralen Steuereinheit (ZSE1) ein Betriebsmoduswechsel signalisiert wird,
b) die dritten Umschaltsteuerungsmittel (USSM3) die Umschaltmittel (USM2) für den signalisierten Betriebsmoduswechsel steuern.

24. Datenendeinrichtung nach Anspruch 15, **dadurch gekennzeichnet, dass**
eine erste Leitungsverbindung (LV1) vorhanden ist, über die die Datenendeinrichtung (DEE) mit der Datenübertragungseinrichtung (DÜE) verbunden ist.

25. Datenendeinrichtung nach Anspruch 16, **dadurch gekennzeichnet, dass**
eine erste Leitungsverbindung (LV1) vorhanden ist, über die die Datenendeinrichtung (DEE) mit dem Datenverarbeitungs-/Datenübertragungsgerät (DVÜG) verbunden ist.

26. Datenendeinrichtung nach Anspruch 15, **dadurch gekennzeichnet, dass**
eine erste Freiraumverbindung (FRV1) vorhanden ist, über die die Datenendeinrichtung (DEE) mit der Datenübertragungseinrichtung (DÜE) verbunden ist.

27. Datenendeinrichtung nach Anspruch 16, **dadurch gekennzeichnet, dass**
eine erste Freiraumverbindung (FRV1) vorhanden ist, über die die Datenendeinrichtung (DEE) mit dem Datenverarbeitungs-/Datenübertragungsgerät (DVÜG) verbunden ist.

28. Datenendeinrichtung nach Anspruch 15, **dadurch gekennzeichnet, dass**
diese zur Bildung einer baulichen Einheit in die Datenübertragungseinrichtung (DÜE) integriert ist.

29. Datenendeinrichtung nach Anspruch 16, **dadurch gekennzeichnet, dass**
diese zur Bildung einer baulichen Einheit in das Datenverarbeitungs-/Datenübertragungsgerät (DVIJG) integriert ist.

30. Datenendeinrichtung nach Anspruch 26 oder 27, **dadurch gekennzeichnet, dass**
die Datenendeinrichtung (DEE) als Schnurlos-Mobilteil ausgebildet ist.

31. Datenendeinrichtung nach Anspruch 15 oder 16, **dadurch gekennzeichnet, dass**
die Daten als Sprach- und/oder Paketdaten ausgebildet sind.
